(19) Europäisches Patentamt
European Patent Office
Office européen des brevets

(11) EP 4 438 633 A1

(12) EUROPEAN PATENT APPLICATION
published in accordance with Art. 153(4) EPC

(43) Date of publication:
**02.10.2024 Bulletin 2024/40**

(21) Application number: **22898630.3**

(22) Date of filing: **24.11.2022**

(51) International Patent Classification (IPC):
***C08F 8/42*** *(2006.01)* ***C08F 8/12*** *(2006.01)*
***C08F 212/14*** *(2006.01)* ***C08L 25/18*** *(2006.01)*
***H01M 10/052*** *(2010.01)* ***H01M 10/0565*** *(2010.01)*

(52) Cooperative Patent Classification (CPC):
**C08F 8/12; C08F 8/42; C08F 212/14; C08L 25/18; H01M 10/052; H01M 10/0565;** Y02E 60/10

(86) International application number:
**PCT/JP2022/043421**

(87) International publication number:
**WO 2023/095848 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2021 JP 2021190326**

(71) Applicants:
- **Sumitomo Chemical Company, Limited**
**Tokyo 103-6020 (JP)**
- **Kyoto University**
**Kyoto-shi, Kyoto 606-8501 (JP)**

(72) Inventors:
- **NAKAJIMA, Hideto**
**Niihama-shi, Ehime 792-8521 (JP)**
- **OUCHI, Makoto**
**Kyoto-shi, Kyoto 606-8501 (JP)**
- **YAMADA, Izumi**
**Kyoto-shi, Kyoto 606-8501 (JP)**

(74) Representative: **Vossius & Partner**
**Patentanwälte Rechtsanwälte mbB**
**Siebertstrasse 3**
**81675 München (DE)**

# (54) POLYMER, METHOD FOR PRODUCING SAME, ELECTROLYTE COMPOSITION, AND BATTERY

(57) A polymer including a structural unit (A) represented by the following formula (A) and a structural unit (B) represented by the following formula (B) or the following formula (C).

[Chem. 1]

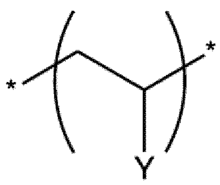

(A)

(In the formula, Y is a group having a lithiated phenolic hydroxyl group.)

[Chem. 2]

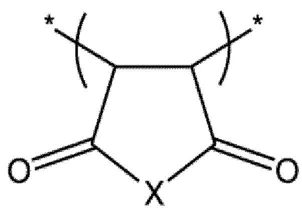

(B)

(In the formula (B), X is an oxygen atom or a tertiary amino group represented by $NR^6$, and $R^6$ is an organic group having 1 to 20 carbon atoms.)

[Chem. 3]

EP 4 438 633 A1

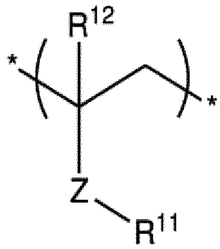

(C)

(In the formula (C), Z is a covalent bond or a divalent group. $R^{12}$ is a hydrogen atom or a monovalent substituent. $R^{11}$, $R^{13}$ and $R^{14}$ are each a hydrogen atom or a monovalent organic group or $R^{11}$ forms a ring together with $R^{13}$ or $R^{14}$.)

## Description

### Technical Field

The present disclosure relates to a polymer, a method for producing the same, an electrolyte composition, and a battery.

### Background Art

Lithium ion batteries and the like have a high capacity, and research is thus actively underway. As electrolytes of lithium ion batteries, a variety of electrolytes such as solutions of a lithium salt containing an organic solvent or an ionic liquid, solid electrolytes and polymer materials are known (Patent Literature 1 and Non-Patent Literature 1). In addition, aside from lithium ion batteries, batteries for which ion conduction of alkali metal ions, such as sodium ions and potassium ions, is used are also known.

### Citation List

### Patent Literature

[Patent Literature 1] Japanese Unexamined Patent Application Publication No. H11-502819

### Non-Patent Literature

[Non-Patent Literature 1] RSC Advances, 2016, vol. 6, issue 58, pp. 53140 to 53147

### Summary of Invention

### Technical Problem

Here, in conventional electrolytes, when a voltage is applied, ions other than alkali metal ions, such as anions, also migrate, and the transport number of alkali metal ions is not sufficient. Therefore, there is a demand for an electrolyte having a high transport number of alkali metal ions.

The present disclosure has been made in consideration of the above-described circumstances, and an objective of the present disclosure is to provide a polymer having a high transport number of alkali metal ions. In addition, another objective of the present disclosure is to provide a method for producing such a polymer and an electrolyte composition or battery containing such as polymer.

### Solution to Problem

A polymer of the present disclosure is a polymer including a first structural unit that is at least one type of structural unit (A) represented by the following formula (A) and a second structural unit that is at least one of a structural unit (B) represented by the following formula (B) and a structural unit (C) represented by the following formula (C), in which a mole ratio n of the first structural unit to all structural units that are included in the polymer is 0.2 to 0.8, and a mole ratio m of the second structural unit to all of the structural units that are included in the polymer is 0.2 to 0.8.

[Chem. 1]

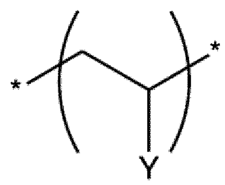

(A)

(In the formula, Y is any of groups represented by the following formulae (A1) to (A6), and * represents a bonding site of the structural unit (A) to other structural units.)

[Chem. 2]

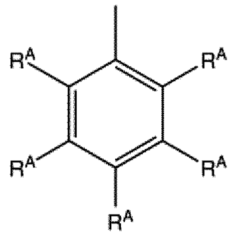

(A1)

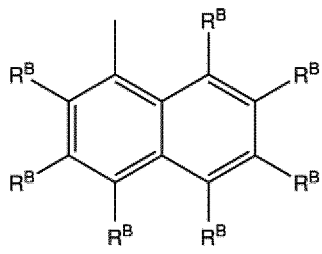

(A2)

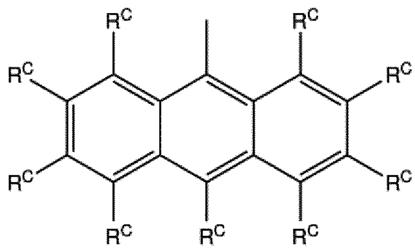

(A3)

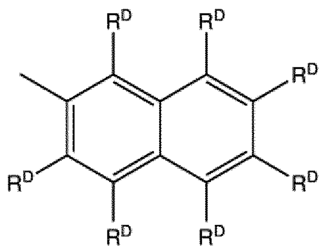

(A4)

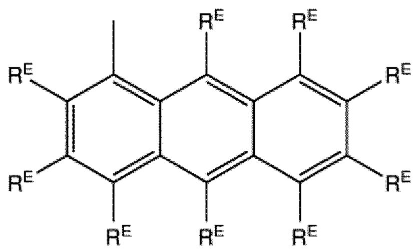

(A5)

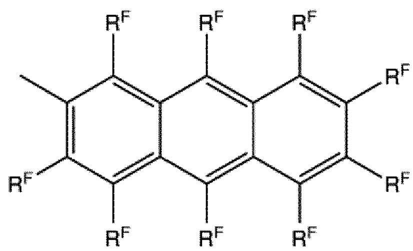

(A6)

(In the formula (A1), at least one of $R^A$ groups is an -OM group, residues are hydrogen atoms or monovalent substituents, and M is Li, Na or K. In the formula (A2), at least one of $R^B$ groups is an -OM group, residues are hydrogen atoms or monovalent substituents, and M is Li, Na or K. In the formula (A3), at least one of $R^C$ groups is an -OM group, residues are hydrogen atoms or monovalent substituents, and M is Li, Na or K. In the formula (A4), at least one of $R^D$ groups is an -OM group, residues are hydrogen atoms or monovalent substituents, and M is Li, Na or K. In the formula

(A5), at least one of $R^E$ groups is an -OM group, residues are hydrogen atoms or monovalent substituents, and M is Li, Na or K. In the formula (A6), at least one of $R^F$ groups is an -OM group, residues are hydrogen atoms or monovalent substituents, and M is Li, Na or K.)

[Chem. 3]

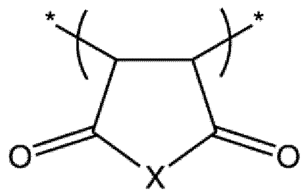

(B)

(In the formula (B), X is an oxygen atom or a tertiary amino group represented by $NR^6$, $R^6$ is an organic group having 1 to 20 carbon atoms, and * is a bonding site of the structural unit (B) to other structural units.)

[Chem. 4]

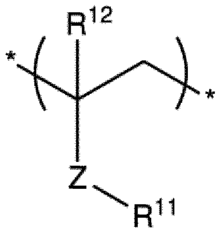

(C)

(In the formula (C), Z is a covalent bond, -O-, -S-, -C(=O)-, - C(=O)O-, -OC(=O)-, -C(=O)$NR^{13}$- or -$NR^{14}$C(=O)-. $R^{12}$ is a hydrogen atom or a monovalent substituent. In a case where Z is a covalent bond, - O-, -S-, -C(=O)-, -C(=O)O- or -OC(=O)-, $R^{11}$ is a hydrogen atom or a monovalent organic group having 1 to 20 carbon atoms, and in a case where Z is -C(=O)$NR^{13}$- or -$NR^{14}$C(=O)-, $R^{11}$, $R^{13}$ and $R^{14}$ are each a hydrogen atom or a monovalent organic group having 1 to 20 carbon atoms or $R^{11}$ forms a ring having 3 to 10 atoms as ring members together with $R^{13}$ or $R^{14}$. * is a bonding site of the structural unit (C) to other structural units.)

The polymer preferably includes the structural unit (B).

An electrolyte composition of the present disclosure contains the polymer and a plasticizer.

The plasticizer is preferably at least one selected from the group consisting of a carbonate-based solvent, an ether-based solvent, a fluorine-based solvent, and an ionic liquid.

An electrolyte composition of the present disclosure contains a polymer containing a lithiated phenolic hydroxyl group and a plasticizer.

The electrolyte composition preferably contains an ionic liquid as the plasticizer.

The polymer containing the lithiated phenolic hydroxyl group preferably includes a carbon chain as a main chain and a group including an aromatic part containing a lithiated phenolic hydroxyl group as a pendant group. In the polymer, the main chain may be crosslinked.

The electrolyte composition preferably further contains an anion receptor.

The electrolyte composition preferably further contains a low-molecular-weight compound capable of accepting an unshared electron pair on an oxygen atom of an alkali metalized phenolic hydroxyl group or an anion thereof.

In the electrolyte composition, a transport number of a lithium ion is preferably 0.5 or more.

A method for producing an alkali metal-containing polymer of the present disclosure includes obtaining a raw material polymer by polymerizing a monomer containing a first monomer that is at least one type of monomer (A') represented by the following formula (A') and a second monomer that is at least one of a monomer (B') represented by

the following formula (B') and a monomer (C') represented by the following formula (C') and converting a group in the raw material polymer that is hydrolyzed to be a hydroxyl group into an -OM group, in which M is Li, Na or K.

[Chem. 5]

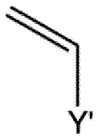

(A')

(In the formula, Y' is any of groups represented by the following formulae (A1') to (A6').)

[Chem. 6]

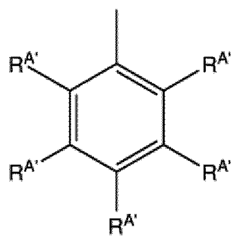

(A1')

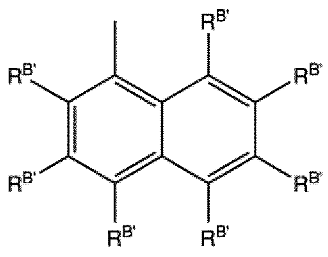

(A2')

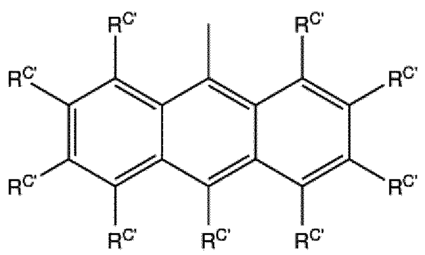

(A3')

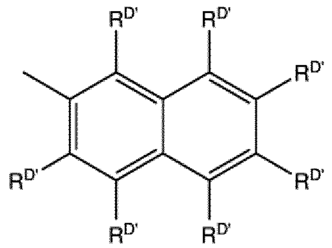

(A4')

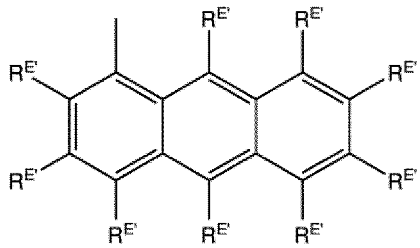

(A5')

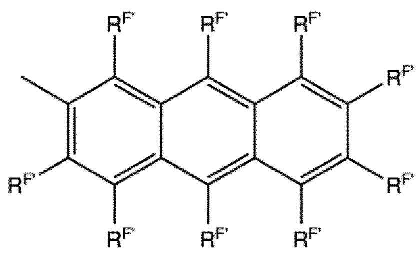

(A6')

(In the formula (A1'), at least one of $R^{A'}$ groups is a group that is hydrolyzed to be a hydroxyl group, and residues are hydrogen atoms or monovalent substituents. In the formula (A2'), at least one of $R^{B'}$ groups is a group that is hydrolyzed to be a hydroxyl group, and residues are hydrogen atoms or monovalent substituents. In the formula (A3'), at least one of $R^{C'}$ groups is a group that is hydrolyzed to be a hydroxyl group, and residues are hydrogen atoms or monovalent substituents. In the formula (A4'), at least one of $R^{D'}$ groups is a group that is hydrolyzed to be a hydroxyl group, and residues are hydrogen atoms or monovalent substituents. In the formula (A5'), at least one of $R^{E'}$ groups is a group that is hydrolyzed to be a hydroxyl group, and residues are hydrogen atoms or monovalent substituents. In the formula (A6'), at least one of $R^{F'}$ groups is a group that is hydrolyzed to be a hydroxyl group, and residues are hydrogen atoms or monovalent substituents.)

[Chem. 7]

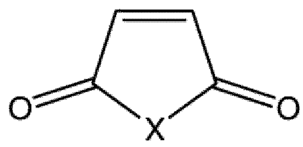

(B')

(In the formula (B'), X is an oxygen atom or a tertiary amino group represented by $NR^6$, and $R^6$ is an organic group having 1 to 20 carbon atoms.)

[Chem. 8]

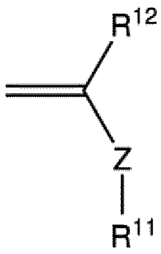

(C')

(In the formula (C'), Z is a covalent bond, -O-, -S-, -C(=O)-, - C(=O)O-, -OC(=O)-, $-C(=O)NR^{13}-$ or $-NR^{14}C(=O)-$. $R^{12}$ is a hydrogen atom or a monovalent substituent. In a case where Z is a covalent bond, - O-, -S-, -C(=O)-, -C(=O)O- or -OC(=O)-, $R^{11}$ is a hydrogen atom or a monovalent organic group having 1 to 20 carbon atoms, and in a case where Z is $-C(=O)NR^{13}-$ or $-NR^{14}C(=O)-$, $R^{11}$, $R^{13}$ and $R^{14}$ are each a hydrogen atom or a monovalent organic group having 1 to 20 carbon atoms or $R^{11}$ forms a ring having 3 to 10 atoms as ring members together with $R^{13}$ or $R^{14}$.)

An alkali metal-containing polymer of the present disclosure is an alkali metal-containing polymer that is obtained by polymerizing a monomer containing a first monomer that is at least one type of monomer (A') represented by the following formula (A') and a second monomer that is at least one of a monomer (B') represented by the following formula (B') and a monomer (C') represented by the following formula (C') to obtain a raw material polymer and converting a group in the raw material polymer that is hydrolyzed to be a hydroxyl group into an -OM group, in which M is Li, Na or K.

[Chem. 9]

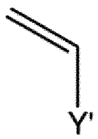

(A')

(In the formula, Y' is any of groups represented by the following formulae (A1') to (A6').)

[Chem. 10]

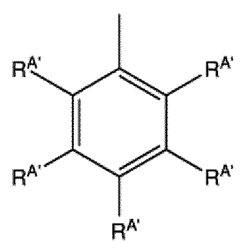 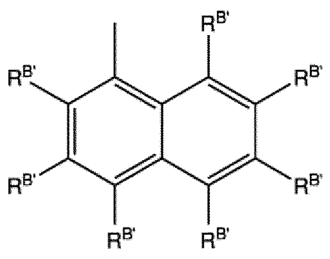

(A1') (A2')

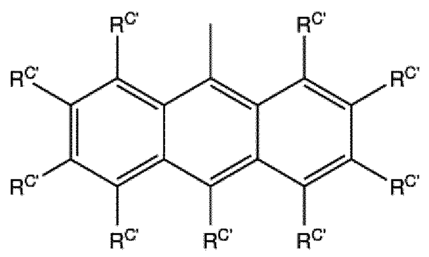

(A3')

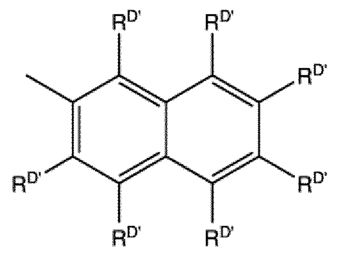 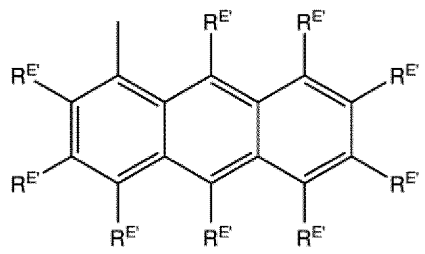

(A4') (A5')

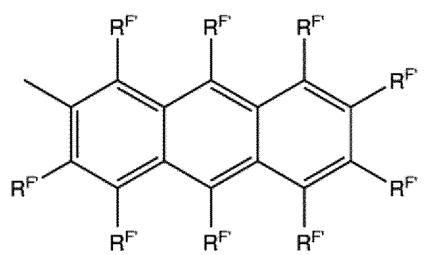

(A6')

(In the formula (A1'), at least one of $R^{A'}$ groups is a group that is hydrolyzed to be a hydroxyl group, and residues are hydrogen atoms or monovalent substituents. In the formula (A2'), at least one of $R^{B'}$ groups is a group that is hydrolyzed to be a hydroxyl group, and residues are hydrogen atoms or monovalent substituents. In the formula (A3'), at least one of $R^{C'}$ groups is a group that is hydrolyzed to be a hydroxyl group, and residues are hydrogen atoms or monovalent substituents. In the formula (A4'), at least one of $R^{D'}$ groups is a group that is hydrolyzed to be a hydroxyl group, and residues are hydrogen atoms or monovalent substituents. In the formula (A5'), at least one of $R^{E'}$ groups is a group that is hydrolyzed to be a hydroxyl group, and residues are hydrogen atoms or monovalent substituents. In the formula (A6'), at least one of $R^{F'}$ groups is a group that is hydrolyzed to be a hydroxyl group, and residues are hydrogen atoms or monovalent substituents.)

[Chem. 11]

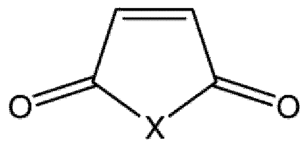

(B')

(In the formula (B'), X is an oxygen atom or a tertiary amino group represented by $NR^6$, and $R^6$ is an organic group having 1 to 20 carbon atoms.)

[Chem. 12]

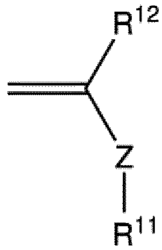

(C')

(In the formula (C'), Z is a covalent bond, -O-, -S-, -C(=O)-, - C(=O)O-, -OC(=O)-, $-C(=O)NR^{13}-$ or $-NR^{14}C(=O)-$. $R^{12}$ is a hydrogen atom or a monovalent substituent. In a case where Z is a covalent bond, - O-, -S-, -C(=O)-, -C(=O)O- or -OC(=O)-, $R^{11}$ is a hydrogen atom or a monovalent organic group having 1 to 20 carbon atoms, and in a case where Z is $-C(=O)NR^{13}-$ or $-NR^{14}C(=O)-$, $R^{11}$, $R^{13}$ and $R^{14}$ are each a hydrogen atom or a monovalent organic group having 1 to 20 carbon atoms or $R^{11}$ forms a ring having 3 to 10 atoms as ring members together with $R^{13}$ or $R^{14}$.)

A battery of the present disclosure contains the polymer, the alkali metal-containing polymer, or the electrolyte composition.

**Advantageous Effects of Invention**

According to the present disclosure, it is possible to provide a polymer having a high transport number of alkali metal ions. In addition, according to the present disclosure, it is possible to provide a method for producing such a polymer and an electrolyte composition or battery containing such as polymer.

**Description of Embodiments**

An electrolyte composition according to the present embodiment contains a polymer containing an alkali metalized phenolic hydroxyl group (alkali metal-containing polymer or alkali metal-containing resin) and a plasticizer. Here, examples of the alkali metal include Li, Na and K, and Li is preferable. The alkali metalized phenolic hydroxyl group refers to an -OM group in which H of -OH that is a phenolic hydroxyl group has been substituted with an alkali metal element M. In addition, when a current flows in association with the charging and discharging of a battery, an anion in an electrolyte is a functional group of a polymer and is thus fixed to the polymer and does not serve as a charge carrier. Therefore, the electrolyte composition is excellent in terms of the transport number of an alkali metal ion, particularly, a lithium ion. Therefore, the electrolyte composition can be suitably used as an electrolyte of batteries. Hereinafter, the alkali metal-containing polymer will also be simply referred to as the polymer.

(Alkali metal-containing polymer)

The polymer containing an alkali metalized phenolic hydroxyl group according to the present embodiment is not particularly limited as long as the polymer has an aromatic part containing an alkali metalized phenolic hydroxyl

group as a structural unit. The structural unit may be a di- or higher-valent structural unit, and the polymer is not limited to a chain polymer and may be a polymer having any structure such as a comb shape, a star shape, a mesh shape or a three-dimensional mesh shape.

The polymer containing an alkali metalized phenolic hydroxyl group preferably includes a carbon chain as a main chain and a group including an aromatic part containing a lithiated phenolic hydroxyl group as a pendant group. The main chain of the polymer may be crosslinked. The carbon chain, which is the main chain, may be, for example, a carbon chain formed by the radical addition polymerization of a compound having an ethylenic unsaturated group.

The polymer is preferably a polymer including a first structural unit that is at least one type of structural unit (A) represented by the following formula (A) and a second structural unit that is at least one of a structural unit (B) represented by the following formula (B) and a structural unit (C) represented by the following formula (C). The polymer preferably includes the structural unit (B). The mole ratio n of the first structural unit to all structural units that are included in the polymer is preferably 0.2 to 0.8. In addition, the mole ratio m of the second structural unit to all of the structural units that are included in the polymer is preferably 0.2 to 0.8. In such a polymer, there is a tendency that the transport number of a lithium ion is higher. Therefore, the polymer can be suitably used as an electrolyte material of batteries.

In addition, the polymer preferably satisfies at least one of the following conditions (1) and (2).

(1) The mole ratio n of the first structural unit to all of the structural units that are included in the polymer is 0.2 to 0.8, and the mole ratio m of the second structural unit to all of the structural units that are included in the polymer is 0.2 to 0.8.

(2) With respect to the total mass of the polymer, the content of the first structural unit is 15 to 80 mass%, and the content of the second structural unit is 20 to 85 mass%.

[Chem. 13]

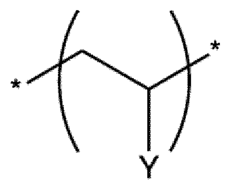

(A)

(In the formula, Y is any of groups represented by the following formulae (A1) to (A6), and * represents a bonding site of the structural unit (A) to other structural units.)

[Chem. 14]

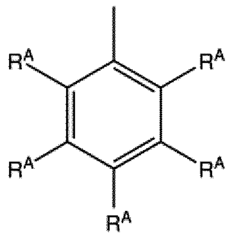

(A1)

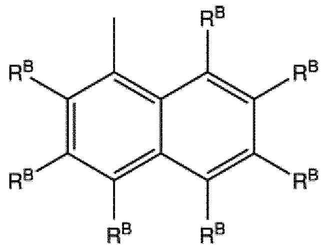

(A2)

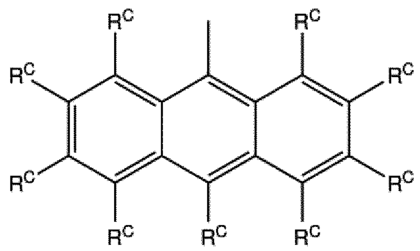

(A3)

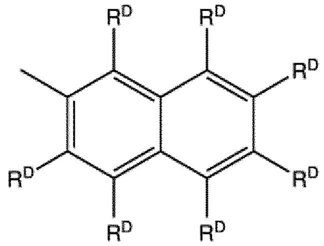

(A4)

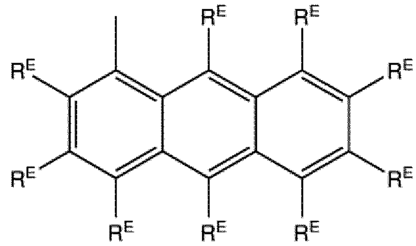

(A5)

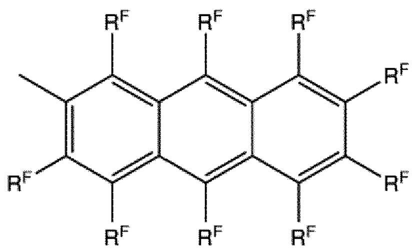

(A6)

(In the formula (A1), at least one of $R^A$ groups is an -OM group, the residues are hydrogen atoms or monovalent substituents, and M is Li, Na or K. In the formula (A2), at least one of $R^B$ groups is an -OM group, the residues are hydrogen atoms or monovalent substituents, and M is Li, Na or K. In the formula (A3), at least one of $R^C$ groups is an -OM group, the residues are hydrogen atoms or monovalent substituents, and M is Li, Na or K. In the formula (A4), at least one of $R^D$ groups is an -OM group, the residues are hydrogen atoms or monovalent substituents, and M is Li, Na or K. In the formula (A5), at least one of $R^E$ groups is an -OM group, the residues are hydrogen atoms or monovalent substituents, and M is Li, Na or K. In the formula (A6), at least one of $R^F$ groups is an -OM group, the residues are hydrogen atoms or monovalent substituents, and M is Li, Na or K.)

[Chem. 15]

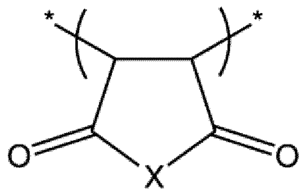

(B)

(In the formula (B), X is an oxygen atom or a tertiary amino group represented by $NR^6$, $R^6$ is an organic group having 1 to 20 carbon atoms, and * is a bonding site of the structural unit (B) to other structural units.)

[Chem. 16]

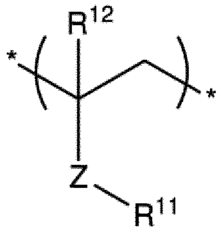

(C)

(In the formula (C), Z is a covalent bond, -O-, -S-, -C(=O)-, - C(=O)O-, -OC(=O)-, -C(=O)$NR^{13}$- or -$NR^{14}$C(=O)-. $R^{12}$ is a hydrogen atom or a monovalent substituent. In a case where Z is a covalent bond, - O-, -S-, -C(=O)-, -C(=O)O- or -OC(=O)-, $R^{11}$ is a hydrogen atom or a monovalent organic group having 1 to 20 carbon atoms, and in a case where Z is -C(=O)$NR^{13}$- or -$NR^{14}$C(=O)-, $R^{11}$, $R^{13}$ and $R^{14}$ are each a hydrogen atom or a monovalent organic group having 1 to 20 carbon atoms or $R^{11}$ forms a ring having 3 to 10 atoms as ring members together with $R^{13}$ or $R^{14}$. * is a bonding site of the structural unit (C) to other structural units.)

In the formula (A1), one to three of the $R^A$ groups are preferably - OM groups and one or two of the $R^A$ groups are more preferably -OM groups. In addition, the $R^A$ groups that are -OM groups or hydrogen atoms are preferably 4 or more and more preferably 5. The $R^A$ groups other than -OM groups may be all hydrogen atoms. M is preferably Li.

In the formula (A1), the monovalent substituent is preferably an electron-withdrawing group. Examples of the electron-withdrawing group include a halogen atom, a sulfonic acid group or a salt thereof, a sulfonic acid ester, a nitro group, a nitrile group and the like. The halogen atom may be any of F, Cl, Br and I.

In addition, in the formula (A1), the monovalent substituent is preferably an organic group having 1 to 20 carbon atoms. The number of the carbon atoms in the organic group may be 1 to 15, may be 1 to 10, may be 1 to 5 or may be 1 to 3. Examples of the organic group include monovalent groups such as hydrocarbon groups and groups having a heterocycle such as groups having a chemical structure formed by substitution of one or more carbon atoms (methylene group) in the hydrocarbon group with a linking group of -O-, -S-, -C(=O)- or -C(=O)O-. In addition, the monovalent groups may have a substituent that substitutes the hydrogen atom bonding to the carbon atom. Examples of the substituent include halogen atoms and the like. The hydrocarbon groups are not particularly limited and may be aliphatic hydrocarbon groups or may be aromatic hydrocarbon groups. The aliphatic hydrocarbon group may be any of a linear hydrocarbon group, a branched hydrocarbon group and a cyclic hydrocarbon group. In addition, the hydrocarbon groups may be any of saturated hydrocarbon groups and unsaturated hydrocarbon groups. Examples of the hydrocarbon groups include a methyl group, an ethyl group, a propyl group, a phenyl group and the like. The monovalent organic group may be an electron-withdrawing group.

Examples of the group represented by the formula (A1) include groups having an -OM group in any of the para site, the meta site and the ortho site with respect to a bonding part with the main chain of a benzene ring, and the

following is preferable.

[Chem. 17]

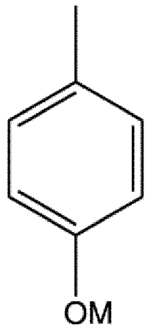

In the formula (A2), one to three of the $R^B$ groups are preferably - OM groups and one or two are more preferably -OM groups. The $R^B$ groups other than -OM groups may be all hydrogen atoms. M is preferably Li. In a case where the $R^B$ group is a monovalent substituent, examples of the substituent include the substituents exemplified in a case where the $R^A$ group has a monovalent substituent.

In the formula (A3), one to three of the $R^C$ groups are preferably - OM groups and one or two are more preferably -OM groups. The $R^C$ groups other than -OM groups may be all hydrogen atoms. M is preferably Li. In a case where the $R^C$ group is a monovalent substituent, examples of the substituent include the substituents exemplified in a case where the $R^A$ group has a monovalent substituent.

In the formula (A4), one to three of the $R^D$ groups are preferably - OM groups and one or two are more preferably -OM groups. The $R^D$ groups other than -OM groups may be all hydrogen atoms. M is preferably Li. In a case where the $R^D$ group is a monovalent substituent, examples of the substituent include the substituents exemplified in a case where the $R^A$ group has a monovalent substituent.

In the formula (A5), one to three of the $R^E$ groups are preferably - OM groups and one or two are more preferably -OM groups. The $R^E$ groups other than -OM groups may be all hydrogen atoms. M is preferably Li. In a case where the $R^E$ group is a monovalent substituent, examples of the substituent include the substituents exemplified in a case where the $R^A$ group has a monovalent substituent.

In the formula (A6), one to three of the $R^F$ groups are preferably - OM groups and one or two are more preferably -OM groups. The $R^F$ groups other than -OM groups may be all hydrogen atoms. M is preferably Li. In a case where the $R^F$ group is a monovalent substituent, examples of the substituent include the substituents exemplified in a case where the $R^A$ group has a monovalent substituent.

The polymer may have one or a plurality of structural units (A). The average number of the -OM groups per polymerization unit (A) in the polymer may be 1 to 3 or may be 1 or 2. In addition, M in the -OM group in the polymer is preferably substantially any one alkali metal of Li, Na and K.

In the formula (B), X is preferably a tertiary amino group represented by $NR^6$. The number of carbon atoms in $R^6$ may be 2 to 15, may be 2 to 10 or may be 2 to 8. Examples of $R^6$ include monovalent groups such as hydrocarbon groups and groups having a heterocycle such as groups having a chemical structure formed by substitution of one or more carbon atoms (methylene group) in the hydrocarbon group with a linking group of -O-, -S-, -C(=O)- or -C(=O)O-. In addition, the monovalent groups may have a substituent that substitutes the hydrogen atom bonding to the carbon atom. Examples of the substituent include halogen atoms and the like. The hydrocarbon groups are not particularly limited and may be aliphatic hydrocarbon groups or may be aromatic hydrocarbon groups. The aliphatic hydrocarbon group may be any of a linear hydrocarbon group, a branched hydrocarbon group and a cyclic hydrocarbon group. In addition, the hydrocarbon groups may be any of saturated hydrocarbon groups and unsaturated hydrocarbon groups.

$R^6$ is preferably a hydrocarbon group or a hydrocarbon group substituted with fluorine and more preferably an ethyl group, a 2,2,2-trifluoroethyl group, an n-dodecyl group, a cyclohexyl group or a benzyl group. The polymer may have one or a plurality of types of structural units (B).

Regarding the condition (1), m is preferably 0.3 to 0.7 and more preferably 0.4 to 0.6. n is preferably 0.3 to 0.7 and more preferably 0.4 to 0.6.

There is no problem as long as the total of m and n is 1 or less, and the total may be 0.95 or less. In addition, the total of m and n may be 0.5 or more, may be 0.6 or more, may be 0.7 or more, may be 0.8 or more, may be 0.9 or more and may be 0.95 or more.

Regarding the condition (2), it is preferable that, with respect to the total mass of the polymer, the content of the first structural unit is 25 to 70 mass% and the content of the second structural unit is 30 to 75 mass%.

The total of the content of the first structural unit and the content of the second structural unit may be 70 mass% or more, may be 80 mass% or more, may be 90 mass% or more or may be 95 mass% or more with respect to the total mass of the polymer.

In the formula (C), Z is preferably a covalent bond, -O-, -C(=O)O-, -OC(=O)- or -C(=O)NR$^{13}$-, more preferably a covalent bond, -O- or - C(=O)NR$^{13}$- and still more preferably -O-.

In a case where R$^{11}$ is a monovalent organic group, the number of carbon atoms in R$^{11}$ is preferably 1 to 18, more preferably 2 to 15 and still more preferably 3 to 13. Specific examples of R$^{11}$ include hydrocarbon groups such as a methyl group, an ethyl group, a n-propyl group, an isopropyl group, a n-butyl group, an isobutyl group, a n-pentyl group, a n-hexyl group, a n-heptyl group, a n-octyl group, a n-nonyl group, a n-decyl group, a n-undecyl group, a n-dodecyl group and a n-tridecyl group.

In a case where R$^{13}$ and R$^{14}$ are monovalent organic groups, these may be each independently a hydrocarbon group, a substituted hydrocarbon group or a group having a heterocycle and is preferably a hydrocarbon group. The numbers of carbon atoms in R$^{13}$ and R$^{14}$ are each preferably 1 to 18, more preferably 2 to 15 and still more preferably 3 to 13.

R$^{13}$ is preferably a hydrogen atom. In addition, R$^{14}$ is preferably a hydrogen atom.

In a case where R$^{11}$ forms a ring having 3 to 10 atoms as ring members together with R$^{13}$ or R$^{14}$, the ring to be formed may be any of aliphatic and aromatic. The ring may include 3 to 6 atoms as ring members. The ring may include 2 to 9 carbon atoms or may include 2 to 6 carbon atoms as ring members. In addition, a hydrogen atom that bonds to the carbon atom, which is a ring member, may be substituted with a substituent. Example thereof include a case where R$^{13}$ or R$^{14}$ and R$^{11}$ form a N-succinimidyl group or the like together with a nitrogen atom of - C(=O)NR$^{13}$- or -NR$^{14}$C(=O)-.

R$^{12}$ is a hydrogen atom or a monovalent substituent. Examples of the monovalent substituent include a halogen atom, organic groups having 1 to 20 carbon atoms and the like. The halogen atom the halogen atom may be any of F, Cl, Br and I. The organic groups may be a hydrocarbon group having 1 to 5 carbon atoms or a fluorine-substituted hydrocarbon group having 1 to 5 carbon atoms and is preferably a methyl group. R$^{12}$ may be a hydrogen atom.

In addition, the polymer may include a different structural unit that is not any of the structural units (A) to (C). Examples of the different structural unit include a structural unit (D) represented by the following formula (D).

[Chem. 18]

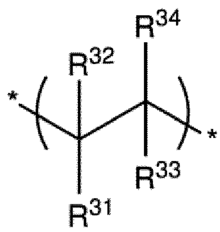

(D)

(In the formula (D), R$^{31}$ to R$^{34}$ are each independently a hydrogen atom or a monovalent substituent having 1 to 20 carbon atoms or two of R$^{31}$ to R$^{34}$ form a ring having 3 to 10 atoms as ring members together, and the residues are hydrogen atoms or monovalent substituents.)

In the structural unit (D), a structural unit that is included in any of the structural units (A) to (C) is not included. That is, the structural unit (D) is not any of the first structural unit and the second structural unit. In the formula (D), three or less of R$^{31}$ to R$^{34}$ may be hydrogen atoms, and one may be a hydrogen atom or any of them may not be a hydrogen atom. Examples of the monovalent substituent include a halogen atom, - C(=O)OH, -CN, -C(=O)NR$^{35}$ (R$^{35}$ may be a hydrogen atom or a monovalent organic group or may form a ring with any of R$^{31}$ to R$^{34}$) and the like. In a case where two of R$^{31}$ to R$^{34}$ form a ring having 3 to 10 atoms as ring members together, the ring may be a heterocycle or may be a carbon ring. A carbon atom that is a ring member of the heterocycle or carbon ring may be substituted with a substituent.

The second structural unit may include any one of the structural unit (B) and the structural unit (C) alone and may include both. The number of the types of each of the structural unit (B) and the structural unit (C) that are included in the second structural unit may be only one or plural.

In a case where the polymer includes the structural unit (C) together with the structural unit (B), the mole ratio of the structural unit (C) to all of the structural units that are included in the polymer may be 0.5 or less, may be 0.3 or

less or may be 0.1 or less.

In a case where the polymer includes the structural unit (D), the mole ratio of the structural unit (D) to all of the structural units that are included in the polymer may be 0.5 or less, may be 0.3 or less or may be 0.1 or less.

The polymer may include a structural unit derived from a crosslinking agent. Examples of the crosslinking agent the crosslinking agent include hexanediol diacrylate, pentaerythritol tetraacrylate and the like.

The number-average molecular weight (Mn) of the polymer may be 2000 to 100000, may be 5000 to 100000 or may be 8000 to 80000. The molecular weight distribution (Mw/Mn) of the polymer may be 1.0 to 10 or may be 1.0 to 8.0. The number-average molecular weight and molecular weight distribution of the polymer can be measured by, for example, gel permeation chromatography.

(Plasticizer)

Examples of the plasticizer include an organic solvent, an ionic liquid and the like. The organic solvent may be an aprotic solvent or may be at least one selected from the group consisting of a carbonate-based solvent, a fluorine-based solvent and an ether-based solvent. The electrolyte composition may contain both an ionic liquid and an organic solvent.

Examples of the carbonate-based solvent include chain carbonates such as dimethyl carbonate, diethyl carbonate and ethyl methyl carbonate; cyclic carbonates such as ethylene carbonate, propylene carbonate, butylene carbonate and vinylene carbonate.

Examples of the ether-based solvent include cyclic ethers such as tetrahydrofuran, 2-methyltetrahydrofuran, tetrahydropyran, 1,3-dioxolane; chain ethers such as 1,2-diethoxyethane and ethoxymethoxyethane. Examples of the fluorine-based solvent include hydrofluorocarbons (perfluorooctane and the like), hydrofluoroethers (methyl nonafluorobutyl ether, ethyl nonafluorobutyl ether and the like), hydrofluoroolefins (1,3,3,3-tetrafluoropropene and the like) and the like. In addition, examples of the organic solvent include aprotic solvents such as dimethyl sulfoxide (DMSO); amide-based solvents such as dimethylformamide (DMF) and dimethylacetamide (DMA).

The content of the organic solvent in the electrolyte composition may be 20 to 600 parts by mass, may be 50 to 400 parts by mass or may be 80 to 300 parts by mass with respect to 100 parts by mass of the polymer.

The ionic liquid is not particularly limited, and examples thereof include imidazolium salts, pyrrolidinium salts, piperidinium salts, pyridinium salts, quaternary ammonium salts, quaternary phosphonium salts and the like. An anion in the ionic liquid is not particularly limited, examples thereof include $Cl^-$, Br, $I^-$, $ClO_4^-$, $PF_6^-$ $BF_4^-$, $CF_3SO_3^-$, $(FSO_2)_2N^-$, $(CF_3SO_2)_2N$, $(C_rF_{2r+1}SO_2)_2N^-$ (r is an integer of 2 or more), $HSO_3$ and the like, and from the viewpoint of electrochemical stability, $PF_6^-$ $BF_4^-$, $CF_3SO_3$, $(FSO_2)_2N^-$, $(CF_3SO_2)_2N^-$ or $(C_mF_{2m+1}SO_2)_2N^-$ are preferable, and $(CF_3SO_2)_2N^-$ is more preferable. The ionic liquid may be a liquid at 25°C.

Examples of a pyrrolidinium cation in the pyrrolidinium salt include the following cation.

[Chem. 19]

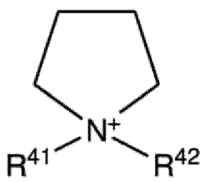

In the formula, $R^{41}$ and $R^{42}$ are each independently a monovalent organic group, and the organic group preferably has 1 to 15 carbon atoms. The monovalent organic group is an alkyl group having 1 to 15 carbon atoms, such as a butyl group, or a group represented by the formula: $-A^1-O-(A^2-O)_k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3).

The group represented by the formula: $-A^1-O-(A^2-O)_k-A^3$ is preferably a group having 1 to 10 carbon atoms and more preferably a $-CH_3OCH_2CH_2OCH_3$ group or $-CH_2CH_2-O-CH_3$. $R^{41}$ is an alkyl group having 1 to 3 carbon atoms and may be a methyl group. $R^{41}$ and $R^{42}$ may be the same as each other or different from each other. Hydrogen bonding to a carbon atom that configures a pyrrolidine ring may be substituted with a substituent.

Examples of a piperidinium cation in the piperidinium salt include the following cation.

[Chem. 20]

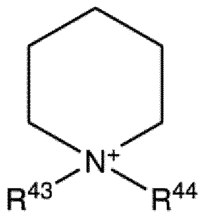

In the formula, $R^{43}$ and $R^{44}$ are each independently a monovalent organic group, and the organic group preferably has 1 to 15 carbon atoms. The monovalent organic group is an alkyl group having 1 to 15 carbon atoms or a group represented by the formula: $-A^1-O-(A^2-O)_k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3).

The alkyl group as $R^{44}$ is more preferably an alkyl group having 2 to 6 carbon atoms such as a butyl group. The group represented by the formula: $-A^1-O-(A^2-O)_k-A^3$ is preferably a group having 1 to 10 carbon atoms and more preferably a $-CH_3OCH_2CH_2OCH_3$ group or $-CH_2CH_2-O-CH_3$. $R^{43}$ is an alkyl group having 1 to 3 carbon atoms and may be a methyl group. $R^{43}$ and $R^{44}$ may be the same as each other or different from each other. Hydrogen bonding to a carbon atom that configures a piperidine ring may be substituted with a substituent.

Examples of an imidazoliumcation in the imidazolium salt include the following cation.

[Chem. 21]

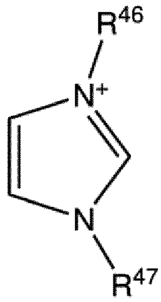

In the formula, $R^{46}$ and $R^{47}$ are each independently a monovalent organic group, and the organic group preferably has 1 to 15 carbon atoms. The monovalent organic group is an alkyl group having 1 to 15 carbon atoms or a group represented by the formula: $-A^1-O-(A^2-O)_k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3).

The alkyl group as $R^{47}$ is more preferably an alkyl group having 2 to 6 carbon atoms such as a butyl group. The group represented by the formula: $-A^1-O-(A^2-O)_k-A^3$ is preferably a group having 1 to 10 carbon atoms and more preferably a $-CH_3OCH_2CH_2OCH_3$ group or $-CH_2CH_2-O-CH_3$. $R^{46}$ is an alkyl group having 1 to 3 carbon atoms and may be a methyl group. $R^{46}$ and $R^{47}$ may be the same as each other or different from each other. Hydrogen bonding to a carbon atom that configures an imidazole ring may be substituted with a substituent.

Examples of an ammonium cation in the quaternary ammonium salt include the following cation.

[Chem. 22]

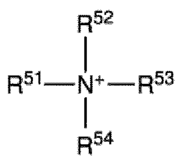

In the formula, $R^{51}$ to $R^{54}$ are each independently a monovalent organic group, and the organic group preferably has 1 to 15 carbon atoms. The monovalent organic group is an alkyl group having 1 to 15 carbon atoms or a group represented by the formula: $-A^1-O-(A^2-O)_k-A^3$ ($A^1$ is an alkylene group having 1 or 2 carbon atoms, $A^2$ is an alkylene

group having 2 or 3 carbon atoms, $A^3$ is an alkyl group having 1 to 3 carbon atoms, and k is 0 to 3). All of $R^{51}$ to $R^{54}$ may be the same as each other or different from each other, but may also be two or more different groups. For example, it is preferable that $R^{51}$ is an alkyl group having 1 to 10 carbon atoms and $R^{52}$ to $R^{54}$ are alkyl groups having 1 to 3 carbon atoms, and it is more preferable that $R^{51}$ is an alkyl group having 3 to 8 carbon atoms, such as a butyl group, and $R^{52}$ to $R^{54}$ are methyl groups or ethyl groups. The group represented by the formula: $-A^1-O-(A^2-O)_k-A^3$ is preferably a group having 1 to 10 carbon atoms and more preferably a $-CH_3OCH_2CH_2OCH_3$ group or $-CH_2CH_2-O-CH_3$.

Examples of a phosphonium cation in the quaternary phosphonium salt include the following cation.

[Chem. 23]

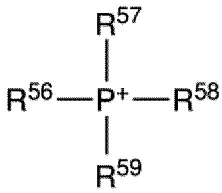

In the formula, $R^{56}$ to $R^{59}$ are each independently a monovalent organic group, and the organic group preferably has 1 to 15 carbon atoms. The monovalent organic group is an alkyl group having 1 to 15 carbon atoms or a group represented by the formula: $-A^1-O-(A^2-O)_k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3). All of $R^{56}$ to $R^{59}$ may be the same as each other or different from each other, but may also be two or more different groups. For example, it is preferable that $R^{56}$ is an alkyl group having 1 to 10 carbon atoms and $R^{57}$ to $R^{59}$ are alkyl groups having 1 to 3 carbon atoms, and it is more preferable that $R^{56}$ is an alkyl group having 3 to 8 carbon atoms, such as a pentyl group, and $R^{57}$ to $R^{59}$ are methyl groups or ethyl groups.)

Specific examples of the ionic liquid include 1-(2-methoxyethoxymethyl)-1-methylpyrrolidinium bis(trifluoromethylsulfonyl)imide, 1-ethyl-3-methylimidazolium bis(trifluoromethylsulfonyl)imide, 1-ethyl-3-methyl imidazolium tetrafluoroborate, 1-n-butyl-1-methylpyrrolidinium bis(fluorosulfonyl)imide, 1-n-butyl-1-methylpyrrolidinium trifluoromethanesulfonic acid, 1-n-butyl-1-methylpyrrolidinium bis(trifluoromethylsulfonyl)imide, triethyl-n-pentylphosphonium bis(trifluoromethylsulfonyl)imide, n-butyltrimethylammonium bis(trifluoromethylsulfonyl)imide and the like.

The content of the ionic liquid in the electrolyte composition may be 20 to 600 parts by mass, may be 50 to 350 parts by mass or may be 80 to 300 parts by mass with respect to 100 parts by mass of the polymer.

The transport number of the electrolyte composition may be 0.5 or more or may be 0.6 or more. The transport number may be 0.7 or more. The transport number may be a transport number measured at room temperature (25°C).

The electrolyte composition may contain a different resin. Examples of the different resin include fluorine-based resins such as polyvinylidene fluoride and a polyvinylidene fluoride-hexafluoropropylene polymer.

The electrolyte composition may further contain (a) an anion receptor or (b) a low-molecular-weight compound capable of accepting an unshared electron pair on an oxygen atom of an alkali metalized phenolic hydroxyl group (the above-described -OM group) or an anion thereof (-O-). Such a compound (a) or (b) has a tendency of accepting an unshared electron pair on an oxygen atom of a lithiated phenolic hydroxyl group in the polymer and forming an acid base complex with the oxygen atom. That is, in a case where the electrolyte composition contains the compound (a) or (b), the alkali metalized phenolic hydroxyl group in the polymer acts as an electron pair donor (Lewis base), and the compound (a) or (b) acts as an electron pair receptor (Lewis acid). This makes it possible to further enhance the alkali ion conductivity of the electrolyte composition.

The anion receptor (a) is a substance that traps an anion. The anion receptor is not particularly limited, and it is possible to use a substance capable of receiving an anion having a negative charge and turning into an anion.

Examples of the anion receptor (a) include compounds disclosed in U.S. Patent No. 5705689 and U.S. Patent No. 6120941 (aza-ether compounds); U.S. Patent No. 6022643 (boron fluoride-based ether compound); U.S. Patent No. 6352798 (phenylboron-based compound). For reference, all of the contents disclosed by these U.S. Patents are incorporated into the present specification.

The anion receptor (a) may be a trivalent boron compound ($B(-R)_3$ or $B(-OR)_3$). R in the boron compound may be aromatic or may be aliphatic. Among aromatic, R can be, for example, an alkyl group, an alkoxy group or the like. In addition, the trivalent boron compound may be a boroxine structure. The aza-ether compounds may be linear, branched or cyclic aza-ether compounds and may have an electron-withdrawing group.

The low-molecular-weight compound (b) is a substance that accepts an electron pair of an anion. While not limited, it is possible to use a substance capable of receiving an anion having a negative charge and turning into an anion.

Examples of the low-molecular-weight compound (b) include compounds disclosed in U.S. Patent No. 5705689 and U.S. Patent No. 6120941 (aza-ether compounds); U.S. Patent No. 6022643 (boron fluoride-based ether compound);

U.S. Patent No. 6352798 (phenylboron-based compound). For reference, all of the contents disclosed by these U.S. Patents are incorporated into the present specification.

The low-molecular-weight compound (b) may be a trivalent boron compound ($B(-R)_3$ or $B(-OR)_3$). R in the boron compound may be aromatic or may be aliphatic. Among aromatic compounds, R can be, for example, an alkyl group, an alkoxy group or the like. In addition, the trivalent boron compound may be a boroxine structure. The aza-ether compounds may be linear, branched or cyclic aza-ether compounds and may have an electron-withdrawing group.

(Method for producing polymer)

A method for producing the polymer is not particularly limited, and monomers having a lithiated phenolic hydroxyl group may be polymerized together or monomers having a phenolic hydroxyl group may be polymerized together and the hydroxyl groups may be then lithiated.

Here, examples of a method for producing the polymer including the first structural unit and the second structural unit include

a method including a step of obtaining a raw material polymer by polymerizing a monomer (monomer mixture) containing a first monomer that is at least one type of monomer (A') represented by the following formula (A') and a second monomer that is at least one of a monomer (B') represented by the following formula (B') and a monomer (C') represented by the following formula (C') and a step of converting a group in the raw material polymer that is hydrolyzed to be a hydroxyl group into an -OM group. A reaction that polymerizes the polymer may be a radical addition reaction.

[Chem. 24]

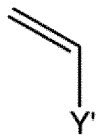

(A')

(In the formula, Y' is any of groups represented by the following formulae (A1') to (A6').)

[Chem. 25]

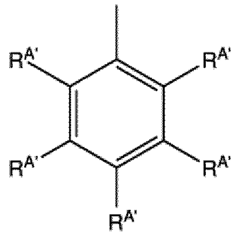

(A1')

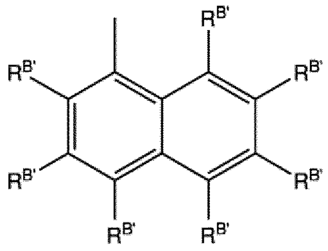

(A2')

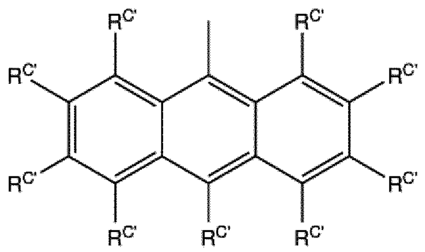

(A3')

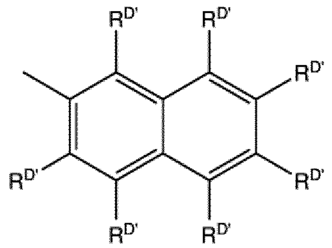

(A4')

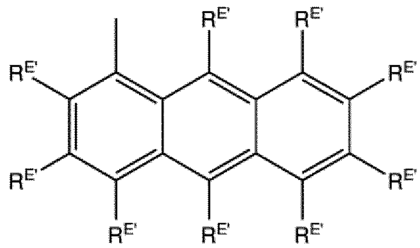

(A5')

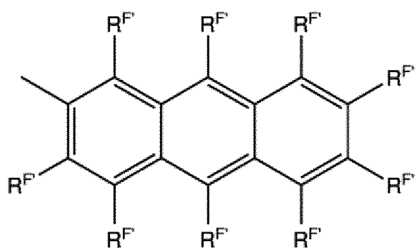

(A6')

(In the formula (A1'), at least one of $R^{A'}$ groups is a group that is hydrolyzed to be a hydroxyl group, and residues are hydrogen atoms or monovalent substituents. In the formula (A2'), at least one of $R^{B'}$ groups is a group that is hydrolyzed to be a hydroxyl group, and residues are hydrogen atoms or monovalent substituents. In the formula (A3'), at least one of $R^{C'}$ groups is a group that is hydrolyzed to be a hydroxyl group, and residues are hydrogen atoms or monovalent substituents. In the formula (A4'), at least one of $R^{D'}$ groups is an -OM group, and residues are hydrogen atoms or monovalent substituents. In the formula (A5'), at least one of $R^{E'}$ groups is a group that is hydrolyzed to be a hydroxyl group, and residues are hydrogen atoms or monovalent substituents. In the formula (A6'), at least one of $R^{F'}$ groups is a group that is hydrolyzed to be a hydroxyl group, and residues are hydrogen atoms or monovalent substituents.)

[Chem. 26]

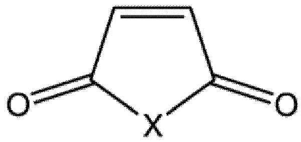

(B')

(In the formula (B'), X is a group corresponding to X in the structural unit (B).)

[Chem. 27]

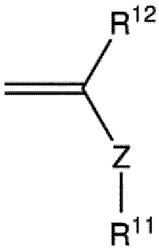

(C')

(In the formula (C'), Z is a covalent bond, -O-, -S-, -C(=O)-, - C(=O)O-, -OC(=O)-, -C(=O)$NR^{13}$- or -$NR^{14}$C(=O)-. $R^{12}$ is a hydrogen atom or a monovalent substituent. In a case where Z is a covalent bond, - O-, -S-, -C(=O)-, -C(=O)O- or -OC(=O)-, $R^{11}$ is a hydrogen atom or a monovalent organic group having 1 to 20 carbon atoms, and in a case where Z is -C(=O)$NR^{13}$- or -$NR^{14}$C(=O)-, $R^{11}$, $R^{13}$ and $R^{14}$ are each a hydrogen atom or a monovalent organic group having 1 to 20 carbon atoms or $R^{11}$ forms a ring having 1 to 10 atoms as ring members together with $R^{13}$ or $R^{14}$.)

The monomer includes the first monomer and the second monomer and may arbitrarily include a different monomer other than the first monomer and the second monomer so that a polymer to be obtained becomes a desired composition. The different monomer may be, for example, a monomer that imparts the structural unit (D) by radical polymerization.

The -OM group in the structural unit (A) is a group obtained by converting the group in the raw material polymer that is hydrolyzed to be a hydroxyl group (hydrolysable group). Here, the hydrolysable group is not particularly limited, and examples thereof include groups indicated by a formula -OR'. R' may be a monovalent hydrocarbon group or a group indicated by a silyl group (-Si(-Si$(R^k)_3$)), and $R^k$ may be a hydrocarbon group such as an alkyl group. The plurality of $R^k$'s may be all the same or different groups may be contained. Examples of the group indicated by the formula -OR' include alkyl groups such as a tert-butoxy group. The number of carbon atoms in R' may be, for example, 1 to 15 or may be 1 to 10.

A method for hydrolyzing the hydrolysable group is not particularly limited, and examples thereof include a method in which the hydrolysable group is hydrolyzed in the presence of an acid.

When the hydrolysable group is hydrolyzed, a hydroxyl group directly bonding to an aromatic ring (phenolic hydroxyl group) is generated. The hydroxyl group is neutralized with a base containing an alkali metal such as a hydroxide salt or carbonate of an alkali metal, whereby the hydroxyl group can be substituted into an -OM group. Almost all of the phenolic hydroxyl groups that are contained in the raw material polymer are preferably substituted into -OM groups, and unreacted phenolic hydroxyl groups may be 5 mol% or less or may be 3 mol% or less of the hydrolysable groups in the raw material polymer.

The structural unit (B) and the structural unit (C) are each a structural unit obtained by the radical polymerization of the monomer (B') and the monomer (C').

Examples of the monomer (B') include maleimide compounds such as N-(2,2,2-trifluoroethyl)maleimide, N-benzylmaleimide and N-ethylmaleimide.

The monomer (C') is not particularly limited, and examples thereof include an olefin compound, a substituted olefin compound, a (meth)acrylic ester, a vinyl ether compound, a vinyl sulfide compound, a vinyl ester compound, an unsaturated ketone, an unsaturated aldehyde, a (meth)acrylamide, a (meth)acrylimide, derivatives thereof and the like.

Specific examples thereof include N-dodecylacrylamide and the like.

The monomer may contain a crosslinking agent. Examples of the crosslinking agent include compounds having a plurality of ethylenically unsaturated groups in the molecule such as hexanediol diacrylate, pentaerythritol tetraacrylate, divinylbenzene and triethylene glycol divinyl ether.

The polymerization may be initiated with a radical polymerization initiator. In that case, a polymerizable composition containing the monomers and an initiator is prepared, and a polymerization reaction of the monomers is performed in the polymerizable composition. In addition, the polymerizable composition may also contain a solvent. In a case where the monomer (A') and the monomer (B') have a relationship of an electron acceptor and an electron donor, the polymer tends to have a block in which the structural units (A) and the structural units (B) are alternately arranged. In a case where the first monomer and the second monomer have a relationship of an electron acceptor and an electron donor, the polymer tends to have a primary structure in which the first structural unit and the second structural unit are alternately arranged.

The radical polymerization initiator may be any of a thermal initiator and a photoinitiator. Examples of the thermal initiator include 2,2-azobis(isobutyronitrile) (AIBN); azo-based initiators such as 2,2-azobis(2-methylbutyronitrile) (AMBN), 2,2-azobis(2,4-dimethylvaleronitrile) (ADVN), 1,1-azobis(1-cyclohexanecarbonitrile) (ACHN, V-40) and dimethyl-2,2-azobisisobutyrate (MAIB); organic peroxides such as dibenzoyl peroxide, di-8,5,5-trimethylhexanoyl peroxide, dilauroyl peroxide, didecanoyl peroxide and di(2,4-dichlorobenzoyl) peroxide; and the like. Examples of the photoinitator include oxime-based compounds, metallocene-based compounds, acylphosphine-based compounds, aminoacetophenone compounds and the like. One or more initiators may be jointly used.

The polymerizable composition may contain a chain transfer agent such as carbon tetrachloride or a thiol compound.

The polymer (alkali metal-containing polymer) has a high transport number of alkali metal ions and is thus suitably contained as a material in batteries, capacitors and the like. Examples of the batteries include lithium ion batteries, sodium ion batteries, potassium ion batteries and the like. The batteries include a positive electrode, a negative electrode and an electrolyte disposed between the positive electrode and the negative electrode, and the electrolyte may contain the polymer. That is, the polymer of the present embodiment can be used as an electrolyte material.

[Examples]

The following monomer (A1) and monomers (B1) to (B3) were prepared.

Monomer (A1): A monomer obtained by distilling 4-tert-butoxystyrene (manufactured by FUJIFILM Wako Pure Chemical Corporation, purity > 98%) using calcium hydride was used.

[Chem. 28]

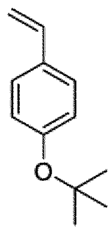

Monomer (B1): The following N-(2,2,2-trifluoroethyl)maleimide

[Chem. 29]

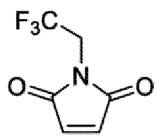

Monomer (B2): The following N-benzylmaleimide

[Chem. 30]

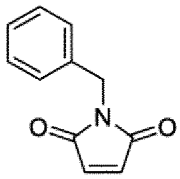

Monomer (B3): The following N-ethylmaleimide

[Chem. 31]

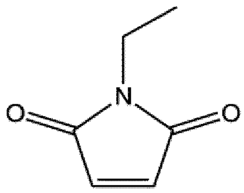

(Production Example 1)

The monomer B1 (0.8955 g, 5 mmol) and 2,2'-azobisisobutyronitrile (manufactured by FUJIFILM Wako Pure Chemical Corporation, purity: 98%) (0.0164 g, 0.1 mmol) were added to a Schlenk tube and cooled to -78°C, and degassing was then performed using a vacuum pump. After that, the monomer A1 (0.941 mL, 5 mmol) and toluene (manufactured by Kishida Chemical Co., Ltd., purity: 99.5%) (4.0 mL) were added to the Schlenk tube in a dry argon atmosphere. After that, a reaction was performed in an oil bath at 60°C for one hour, and an air was then bubbled, thereby pausing the reaction. A reaction solution was diluted with THF and then added dropwise to an excess amount of methanol, thereby precipitating a polymer. The precipitate was filtered, washed with methanol, then, dissolved in 1,4-dioxane and freeze-dried, thereby obtaining a target polymer (yield: 99.2%, Mn = 141,000, Mw/Mn = 2.26, A1/B1 = 51/49). The ratio of monomer compositions was obtained by $^{1}$H-NMR. In Manufacturing Examples 1 to 3, the number-average molecular weights (Mn) and molecular weight distributions (Mw/Mn, Mw is the weight-average molecular weight) of polymers were measured by gel permeation chromatography.

The polymer (2.1 g) obtained above was added to a flask and dissolved in THF (74 mL). A saturated hydrochloric acid aqueous solution (15 mL) was slowly added to this solution, and reflux was then performed for 20 hours. After being cooled, the solution mixture was added dropwise to a large amount of water, and a precipitate was then collected by filtration. The precipitate was washed with pure water (the washing was performed until the pH of the water after the washing reached seven). The precipitate was dissolved in 1,4-dioxane and freeze-dried, thereby obtaining a target polymer in which a tert-butoxy group had been converted into an OH group (yield: 60%).

The polymer having the above-obtained OH group (153.7 mg, 0.5 mmol) and lithium hydroxide (14.4 mg, 0.6 mmol) were added to a flask and dissolved in dehydrated dimethyl formamide (15 mL). The inside of the flask was substituted with dry nitrogen, and a reaction was performed at 135°C for 12 hours. In an argon-substituted globe box, the reaction solution was filtered, an excess amount of LiOH was removed, and the solvent was removed with an evaporator. It was confirmed that a peak derived from the OH group had disappeared by $^{1}$H-NMR and IR.

(Production Example 2)

The monomer B2 (1.872 g, 10 mmol) and 2,2'-azobisisobutyronitrile (manufactured by FUJIFILM Wako Pure Chemical Corporation, purity: 98%) (0.0328 g, 0.2 mmol) were added to a Schlenk tube and cooled to -78°C, and degassing was then performed using a vacuum pump. After that, the monomer A1 (1.883 mL, 10 mmol) and toluene (manufactured by Kishida Chemical Co., Ltd., purity: 99.5%) (7.9 mL) were added to the Schlenk tube in a dry argon atmosphere. After that, a reaction was performed in an oil bath at 60°C for one hour, and an air was then bubbled, thereby pausing the reaction. A reaction solution was diluted with THF and then added dropwise to an excess amount of methanol, thereby precipitating a polymer. The precipitate was filtered, washed with methanol, then, dissolved in 1,4-dioxane and freeze-dried, thereby obtaining a target polymer (yield: 99.2%, Mn = 60,000, Mw/Mn = 7.85, A1/B1 = 51/49). The ratio of monomer compositions was obtained by $^{1}$H-NMR.

The polymer (3.3 g) obtained above was added to a flask and dissolved in THF (83 mL). A saturated hydrochloric acid aqueous solution (11 mL) was slowly added to this solution, and reflux was then performed for 20 hours. After being

cooled, the solution mixture was added dropwise to a large amount of water, and a precipitate was then collected by filtration. The precipitate was washed with pure water (the washing was performed until the pH of the water after the washing reached seven). The precipitate was dissolved in 1,4-dioxane and freeze-dried, thereby obtaining a target polymer in which a tert-butoxy group had been converted into an OH group (yield: 58%, Mn = 52,000, Mw/Mn = 3.43).

The polymer having the above-obtained OH group (153.7 mg, 0.5 mmol) and lithium hydroxide (14.4 mg, 0.6 mmol) were added to a flask and dissolved in dehydrated dimethyl formamide (15 mL). The inside of the flask was substituted with dry nitrogen, and a reaction was performed at 135°C for 12 hours. In an argon-substituted globe box, the reaction solution was filtered, an excess amount of LiOH was removed, and the solvent was removed with an evaporator. It was confirmed that a peak derived from the OH group had disappeared by $^{1}$H-NMR and IR.

(Production Example 3)

The monomer B3 (1.25 g, 10 mmol) and 2,2'-azobisisobutyronitrile (manufactured by FUJIFILM Wako Pure Chemical Corporation, purity: 98%) (0.0328 g, 0.2 mmol) were added to a Schlenk tube and cooled to -78°C, and degassing was then performed using a vacuum pump. After that, styrene (1.145 mL, 10 mmol) and toluene (manufactured by Kishida Chemical Co., Ltd., purity: 99.5%) (8.7 mL) were added thereto in a dry argon atmosphere. After that, a reaction was performed in an oil bath at 60°C for two hours, and an air was then bubbled, thereby pausing the reaction. A reaction solution was diluted with THF and then added dropwise to an excess amount of methanol, thereby precipitating a polymer. The precipitate was filtered, washed with methanol, then, dissolved in 1,4-dioxane and freeze-dried, thereby obtaining a target polymer (yield: 99.3%, Mn = 71,700, Mw/Mn = 2.84, A1/B1 = 49/51). The compositional ratio of the monomers was obtained by $^{1}$H-NMR.

The monomers, which were the raw materials of each of the produced polymers and the compositions are shown in Table 1.

[Table 1]

| Polymer | Monomer ('A) | Monomer ('B) | Composition* (mole ratio) | |
|---|---|---|---|---|
| | | | Prepared | Measurement value |
| Polymer 1 | A1 | B1 | 50:50 | 51:49 |
| Polymer 2 | A1 | B2 | 50:50 | 51:49 |
| Polymer 3 | Styrene | B3 | 50:50 | 49:51 |
| * Structural unit (A):structural unit (B) | | | | |

(Examples 1 to 9)

An organic solvent and a resin or an ionic liquid as necessary were added to the polymer so that the composition became as shown in Table 2, thereby producing electrolyte compositions. In Table 2, the amounts of the organic solvent, the resin and the ionic liquid added are amounts (parts by mass) with respect to 100 parts by mass of the polymer. As the organic solvent, a solvent mixture containing ethylene carbonate and propylene carbonate in a volume ratio of 1:1 was used. The resin used is polyvinylidene fluoride-hexafluoropropylene (PVDF-HFP, manufactured by Sigma-Aldrich Co. LLC., Mw: to 400,000, Mn: to 130,000, pellet shape, product number: 427160). In addition, the ionic liquids used are the following ionic liquids A to H.

Ionic liquid A:

[Chem. 32]

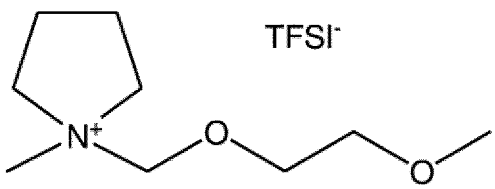

Ionic liquid B:

[Chem. 33]

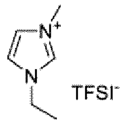

Ionic liquid C:

[Chem. 34]

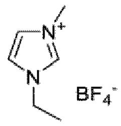

Ionic liquid D:

[Chem. 35]

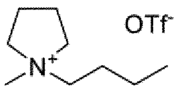

Ionic liquid E:

[Chem. 36]

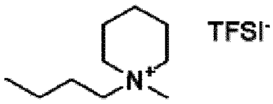

Ionic liquid F:

[Chem. 37]

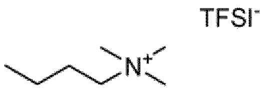

Ionic liquid G:

[Chem. 38]

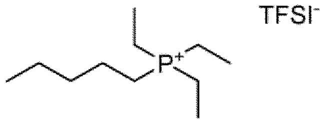

Ionic liquid H:

[Chem. 39]

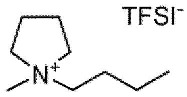

OTf⁻ is a triflate(trifluoromethanesulfonate) anion, FSI⁻ is a bis(fluorosulfonyl)imide anion, and TFSI⁻ is a bis(trifluoromethanesulfonyl)imide ion.

(Comparative Examples 1 to 3)

As Comparative Examples 1 to 3, each electrolyte composition having a composition as shown in Table 3 was prepared. In Comparative Examples 1 and 2, a lithium salt (LiTFSI) was used instead of the polymers. In addition, in Comparative Example 3, a combination of a polymer containing no lithium and a lithium salt was used. As an organic solvent, the same solvent mixture as in Example 1 was used in all of the electrolyte compositions.

Regarding the electrolyte compositions of Examples 1 to 9 and Comparative Examples 1 to 3, measurement of ion conductivity, activation energy and lithium ion transport number was performed under the following conditions. The results are shown in Table 2 and Table 3.

Ion conductivity:

An evaluation cell of a coin battery CR2032 was assembled in a dry argon atmosphere in a glove box. Specifically, each layer was laminated in the following order in an evaluation cell to fabricate a laminate for testing. (Stainless steel sheet/electrolyte composition/stainless steel sheet)

The impedance is measured using an impedance measuring instrument under conditions of 25°C, a frequency range of 0.1 Hz to 1 MHz and an application voltage of 10 mV (vs. open circuit voltage). The ion conductivity σ can be calculated by the following formula.

$$\sigma\ (S\cdot cm^{-1}) = t\ (cm)/(R(\Omega) \times A\ (cm^2))$$

In the formula, R indicates the impedance value. A indicates the area of a sample. t indicates the thickness of the sample.

Activation energy:

Ion conductivity measurement using the evaluation cell was also performed under conditions of 25°C, 30°C, 40°C, 50°C, 60°C and 70°C, and a change of the ion conductivity with respect to the temperature was measured. The activation energy was calculated from the slope of a graph of the common logarithm value of the ion conductivity and the reciprocal of temperature by the Arrhenius equation (log k = log A -Ea/RT, k: reaction rate constant, A: frequency factor, Ea: activation energy, R: gas constant and T: absolute temperature).

Lithium ion transport number:

An evaluation cell of a coin battery CR2032 was assembled in a dry argon atmosphere in a glove box. Specifically, each layer was laminated in the following order in an evaluation cell to fabricate a laminate for testing. (Lithium/electrolyte composition/lithium)

A method for measuring the lithium ion transport number is a method introduced in Polymer, 28, 2324 (1987).

That is, 10 mV was applied to the testing laminate at room temperature (25°C), the initial current value ($I_0$) and the steady current value ($I_{SS}$) were measured, and furthermore, the interfacial resistance measurement value $R_0$ before the application of the voltage and the interfacial resistance measurement value $R_{SS}$ after the application of the voltage were obtained by a complex impedance method. In addition, the obtained values were assigned to the following formula to obtain a lithium ion transport number ($t_{Li+}$). V in the formula is the application voltage.

$$t_{Li+} = I_{SS}(V - I_0R_0)/I_0(V - I_{SS}R_{SS})$$

[Table 2]

| Example | Polymer type | Resin | Ionic liquid | | Organic solvent Parts by mass | $Li^+$ concentration (mol/kg) | σ (mS/cm) | Ea (kJ/mol) | $Li^+$ transport number |
|---|---|---|---|---|---|---|---|---|---|
| | | Parts by mass | Type | Parts by mass | | | | | |
| 1 | Polymer 1 | - | B | 100 | 100 | 1.1 | 0.25 | 17.1 | 0.66 |
| 2 | Polymer 1 | - | C | 100 | 100 | 1.1 | 0.64 | 18.5 | 0.71 |
| 3 | Polymer 1 | - | D | 100 | 100 | 1.1 | 0.36 | 20.4 | 0.64 |
| 4 | Polymer 2 | - | E | 80 | 100 | 1.1 | 0.93 | 22.6 | 0.62 |
| 5 | Polymer 2 | - | G | 80 | 100 | 1.1 | 0.43 | 21.4 | 0.73 |
| 6 | Polymer 2 | - | F | 80 | 100 | 1.1 | 0.34 | 28.4 | 0.73 |
| 7 | Polymer 2 | - | H | 100 | 100 | 1.1 | 0.22 | 17.1 | 0.67 |
| 8 | Polymer 2 | 100 | A | 250 | 100 | 0.6 | 0.50 | 29.30 | 0.64 |
| 9 | Polymer 2 | 100 | - | - | 600 | 0.5 | 0.005 | 19.0 | 0.85 |

[Table 3]

| Electrolyte composition | Polymer | Lithium salt | $Li^+$ concentration (mol/kg) | Ionic liquid | | Organic solvent amount (parts by mass) | $Li^+$ transport number |
|---|---|---|---|---|---|---|---|
| | | | | Type | Amount used | | |
| Comparative Example 1 | - | LiTFSI | 0.36 | A | 400 | 100 | < 0.2 |
| Comparative Example 2 | - | LiTFSI | 0.36 | - | - | 500 | Approximately 0.2 |
| Comparative Example 3 | Polymer 3 | LiTFSI | 1.1 | A | 100 | 100 | 0.3 |

## Claims

**1.** A polymer comprising:

a first structural unit that is at least one type of structural unit (A) represented by the following formula (A); and a second structural unit that is at least one of a structural unit (B) represented by the following formula (B) and a structural unit (C) represented by the following formula (C),
wherein a mole ratio n of the first structural unit to all structural units that are included in the polymer is 0.2 to 0.8, and a mole ratio m of the second structural unit to all of the structural units that are included in the polymer is 0.2 to 0.8,

[Chem. 1]

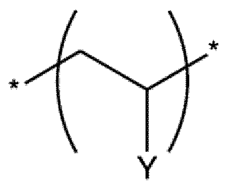

(A)

(in the formula, Y is any of groups represented by the following formulae (A1) to (A6), and * represents a bonding site of the structural unit (A) to other structural units),

[Chem. 2]

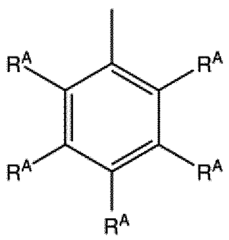

(A1)

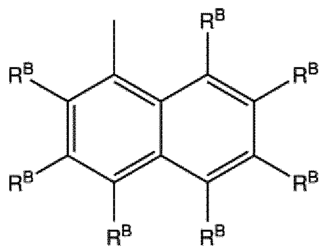

(A2)

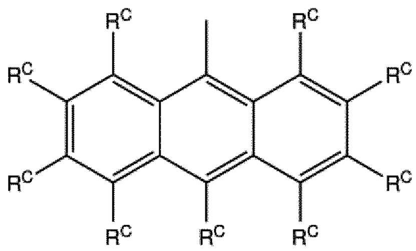

(A3)

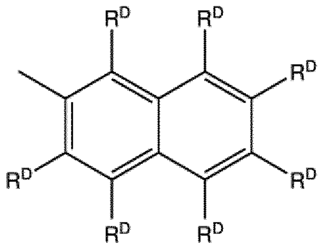

(A4)

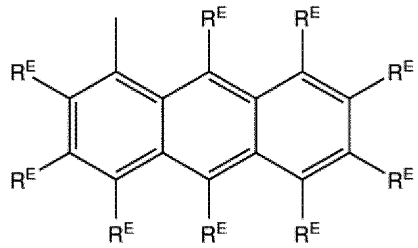

(A5)

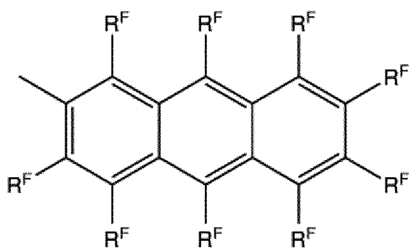

(A6)

(in the formula (A1), at least one of $R^A$ groups is an -OM group, residues are hydrogen atoms or monovalent substituents, and M is Li, Na or K, in the formula (A2), at least one of $R^B$ groups is an -OM group, residues are hydrogen atoms or monovalent substituents, and M is Li, Na or K, in the formula (A3), at least one of $R^C$ groups is an -OM group, residues are hydrogen atoms or monovalent substituents, and M is Li, Na or K, in the formula (A4), at least one of $R^D$ groups is an -OM group, residues are hydrogen atoms or monovalent substituents, and M is Li, Na or K, in the formula (A5), at least one of $R^E$ groups is an -OM group, residues are hydrogen atoms or monovalent substituents, and M is Li, Na or K, in the formula (A6), at least one of $R^F$ groups is an -OM group, residues are hydrogen atoms or monovalent substituents, and M is Li, Na or K),

[Chem. 3]

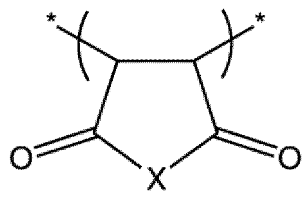

(B)

(in the formula (B), X is an oxygen atom or a tertiary amino group represented by $NR^6$, $R^6$ is an organic group having 1 to 20 carbon atoms, and * is a bonding site of the structural unit (B) to other structural units), and

[Chem. 4]

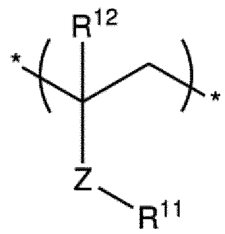

(C)

(in the formula (C), Z is a covalent bond, -O-, -S-, -C(=O)-, - C(=O)O-, -OC(=O)-, -C(=O)$NR^{13}$- or -$NR^{14}$C(=O)-, $R^{12}$ is a hydrogen atom or a monovalent substituent, in a case where Z is a covalent bond, - O-, -S-, -C(=O)-, -C(=O)O- or -OC(=O)-, $R^{11}$ is a hydrogen atom or a monovalent organic group having 1 to 20 carbon atoms, and in a case where Z is -C(=O)$NR^{13}$- or -$NR^{14}$C(=O)-, $R^{11}$, $R^{13}$ and $R^{14}$ are each a hydrogen atom or a monovalent organic group having 1 to 20 carbon atoms or $R^{11}$ forms a ring having 3 to 10 atoms as ring members together with $R^{13}$ or $R^{14}$, and * is a bonding site of the structural unit (C) to other structural units).

**2.** The polymer according to Claim 1, comprising:
the structural unit (B).

**3.** An electrolyte composition comprising:

the polymer according to Claim 1 or 2; and
a plasticizer.

**4.** The electrolyte composition according to Claim 3,
wherein the plasticizer is at least one selected from the group consisting of a carbonate-based solvent, an ether-based solvent, a fluorine-based solvent, and an ionic liquid.

**5.** An electrolyte composition comprising:

a polymer containing a lithiated phenolic hydroxyl group; and
a plasticizer.

**6.** The electrolyte composition according to Claim 5,

wherein the plasticizer contains an ionic liquid.

7. The electrolyte composition according to Claim 5 or 6,
wherein the polymer containing the lithiated phenolic hydroxyl group includes a carbon chain as a main chain and a group including an aromatic part containing a lithiated phenolic hydroxyl group as a pendant group, and the main chain is optionally crosslinked.

8. The electrolyte composition according to any one of Claims 3 to 7, further comprising:
an anion receptor.

9. The electrolyte composition according to any one of Claims 3 to 7, further comprising:
a low-molecular-weight compound capable of accepting an unshared electron pair on an oxygen atom of an alkali metalized phenolic hydroxyl group or an anion thereof.

10. The electrolyte composition according to any one of Claims 3 to 9,
wherein a transport number of a lithium ion is 0.5 or more.

11. A method for producing an alkali metal-containing polymer, comprising:

obtaining a raw material polymer by polymerizing a monomer containing a first monomer that is at least one type of monomer (A') represented by the following formula (A') and a second monomer that is at least one of a monomer (B') represented by the following formula (B') and a monomer (C') represented by the following formula (C'); and
converting a group in the raw material polymer that is hydrolyzed to be a hydroxyl group into an -OM group, wherein M is Li, Na or K,

[Chem. 5]

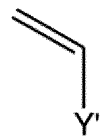

(A')

(in the formula, Y' is any of groups represented by the following formulae (A1') to (A6')),

[Chem. 6]

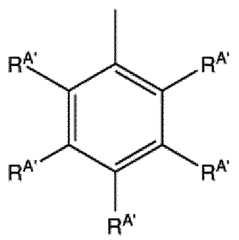

(A1')

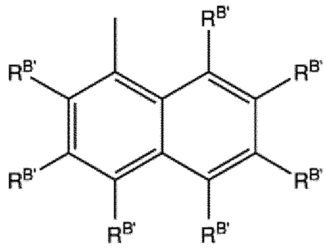

(A2')

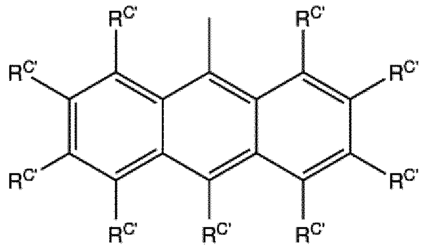

(A3')

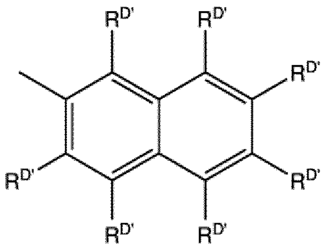

(A4')

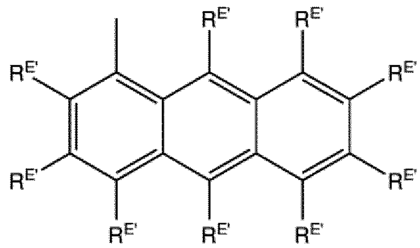

(A5')

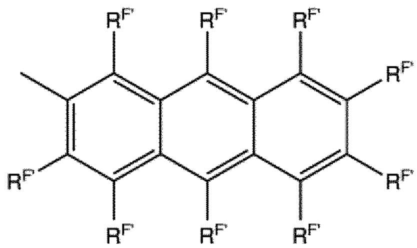

(A6')

(in the formula (A1'), at least one of $R^{A'}$ groups is a group that is hydrolyzed to be a hydroxyl group, and residues are hydrogen atoms or monovalent substituents, in the formula (A2'), at least one of $R^{B'}$ groups is a group that is hydrolyzed to be a hydroxyl group, and residues are hydrogen atoms or monovalent substituents, in the formula (A3'), at least one of $R^{C'}$ groups is a group that is hydrolyzed to be a hydroxyl group, and residues are hydrogen atoms or monovalent substituents, in the formula (A4'), at least one of $R^{D'}$ groups is a group that is hydrolyzed to be a hydroxyl group, and residues are hydrogen atoms or monovalent substituents, in the formula (A5'), at least one of $R^{E'}$ groups is a group that is hydrolyzed to be a hydroxyl group, and residues are hydrogen atoms or monovalent substituents, in the formula (A6'), at least one of $R^{F'}$ groups is a group that is hydrolyzed to be a hydroxyl group, and residues are hydrogen atoms or monovalent substituents),

[Chem. 7]

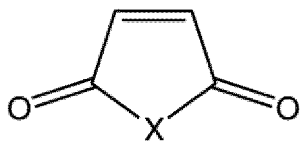

(B')

(in the formula (B'), X is an oxygen atom or a tertiary amino group represented by $NR^6$, and $R^6$ is an organic group having 1 to 20 carbon atoms), and

[Chem. 8]

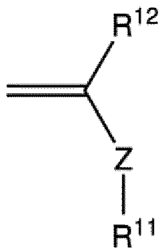

(C')

(in the formula (C'), Z is a covalent bond, -O-, -S-, -C(=O)-, - C(=O)O-, -OC(=O)-, $-C(=O)NR^{13}-$ or $-NR^{14}C(=O)-$, $R^{12}$ is a hydrogen atom or a monovalent substituent, in a case where Z is a covalent bond, - O-, -S-, -C(=O)-, -C(=O)O- or -OC(=O)-, $R^{11}$ is a hydrogen atom or a monovalent organic group having 1 to 20 carbon atoms, and in a case where Z is $-C(=O)NR^{13}-$ or $-NR^{14}C(=O)-$, $R^{11}$, $R^{13}$ and $R^{14}$ are each a hydrogen atom or a monovalent organic group having 1 to 20 carbon atoms or $R^{11}$ forms a ring having 3 to 10 atoms as ring members together with $R^{13}$ or $R^{14}$).

**12.** An alkali metal-containing polymer that is obtained by polymerizing a monomer containing a first monomer that is at least one type of monomer (A') represented by the following formula (A') and a second monomer that is at least one of a monomer (B') represented by the following formula (B') and a monomer (C') represented by the following formula (C') to obtain a raw material polymer and converting a group in the raw material polymer that is hydrolyzed to be a hydroxyl group into an -OM group,

wherein M is Li, Na or K,

[Chem. 9]

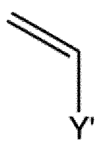

(A')

(in the formula, Y' is any of groups represented by the following formulae (A1') to (A6')),

[Chem. 10]

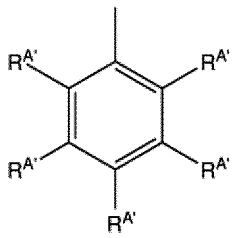

(A1')

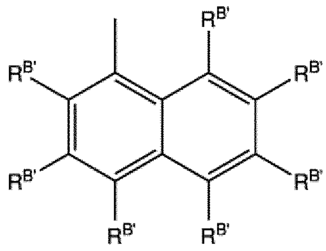

(A2')

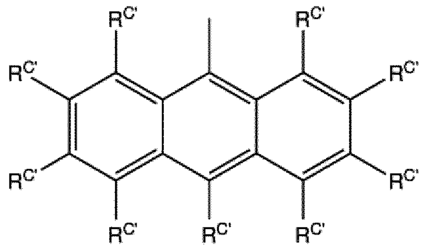

(A3')

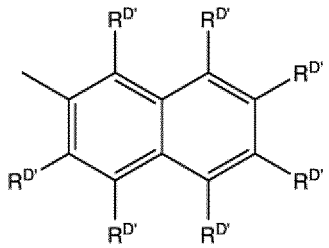

(A4')

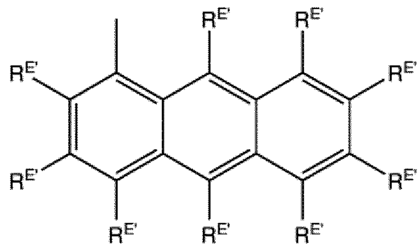

(A5')

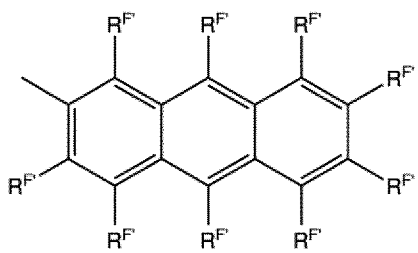

(A6')

(in the formula (A1'), at least one of $R^{A'}$ groups is a group that is hydrolyzed to be a hydroxyl group, and residues are hydrogen atoms or monovalent substituents, in the formula (A2'), at least one of $R^{B'}$ groups is a group that is hydrolyzed to be a hydroxyl group, and residues are hydrogen atoms or monovalent substituents, in the formula (A3'), at least one of $R^{C'}$ groups is a group that is hydrolyzed to be a hydroxyl group, and residues are hydrogen atoms or monovalent substituents, in the formula (A4'), at least one of $R^{D'}$ groups is a group that is hydrolyzed to be a hydroxyl group, and residues are hydrogen atoms or monovalent substituents, in the formula (A5'), at least one of $R^{E'}$ groups is a group that is hydrolyzed to be a hydroxyl group, and residues are hydrogen

atoms or monovalent substituents, and in the formula (A6'), at least one of $R^{F'}$ groups is a group that is hydrolyzed to be a hydroxyl group, and residues are hydrogen atoms or monovalent substituents),

[Chem. 11]

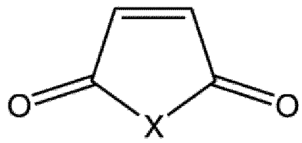

(B')

(in the formula (B'), X is an oxygen atom or a tertiary amino group represented by $NR^6$, and $R^6$ is an organic group having 1 to 20 carbon atoms), and

[Chem. 12]

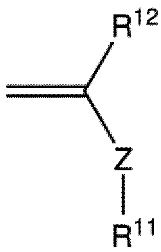

(C')

(in the formula (C'), Z is a covalent bond, -O-, -S-, -C(=O)-, - C(=O)O-, -OC(=O)-, $-C(=O)NR^{13}-$ or $-NR^{14}C(=O)-$, $R^{12}$ is a hydrogen atom or a monovalent substituent, in a case where Z is a covalent bond, - O-, -S-, -C(=O)-, -C(=O)O- or -OC(=O)-, $R^{11}$ is a hydrogen atom or a monovalent organic group having 1 to 20 carbon atoms, and in a case where Z is $-C(=O)NR^{13}-$ or $-NR^{14}C(=O)-$, $R^{11}$, $R^{13}$ and $R^{14}$ are each a hydrogen atom or a monovalent organic group having 1 to 20 carbon atoms or $R^{11}$ forms a ring having 3 to 10 atoms as ring members together with $R^{13}$ or $R^{14}$).

**13.** A battery comprising:
the polymer according to Claim 1 or 2; the alkali metal-containing polymer according to Claim 12, or the electrolyte composition according to any one of Claims 3 to 10.

**INTERNATIONAL SEARCH REPORT**

International application No. **PCT/JP2022/043421**

**A. CLASSIFICATION OF SUBJECT MATTER**

***C08F 8/42***(2006.01)i; ***C08F 8/12***(2006.01)i; ***C08F 212/14***(2006.01)i; ***C08L 25/18***(2006.01)i; ***H01M 10/052***(2010.01)i; ***H01M 10/0565***(2010.01)i
FI: C08F8/42; C08F8/12; C08L25/18; H01M10/052; H01M10/0565; C08F212/14

According to International Patent Classification (IPC) or to both national classification and IPC

**B. FIELDS SEARCHED**

Minimum documentation searched (classification system followed by classification symbols)

C08F8/42; C08F8/12; C08F212/14; C08L25/18; H01M10/052; H01M10/0565

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2004-119318 A (SUMITOMO BAKELITE CO LTD) 15 April 2004 (2004-04-15) claims, paragraphs [0016], [0020], [0022]-[0024], [0026] | 1, 3-4, 10, 12-13 |
| Y | | 8-9 |
| A | | 2, 11 |
| X | JP 2-212559 A (ASSOC UNIV INC) 23 August 1990 (1990-08-23) claims, examples 2-3 | 1, 12-13 |
| A | | 2-4, 8-11 |
| X | WO 2016/035555 A1 (FUJIFILM CORPORATION) 10 March 2016 (2016-03-10) paragraph [0282] | 1, 12 |
| A | | 2-4, 8-11, 13 |
| Y | JP 2015-53244 A (UNIV TOKYO) 19 March 2015 (2015-03-19) claims, paragraphs [0041]-[0043] | 8–9 |
| A | | 1-4, 10-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 February 2023** | **14 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/043421**

**Box No. III Observations where unity of invention is lacking (Continuation of item 3 of first sheet)**

This International Searching Authority found multiple inventions in this international application, as follows:

Document 1: JP 2004-119318 A (SUMITOMO BAKELITE CO LTD) 15 April 2004 (2004-04-15) claims, paragraphs [0016], [0020], [0022]-[0024], [0026]
Document 2: JP 2-212559 A (ASSOC UNIV INC) 23 August 1990 (1990-08-23) claims, examples 2-3
Document 3: WO 2016/035555 A1 (FUJIFILM CORPORATION) 10 March 2016 (2016-03-10) paragraph [0282]

Claims are classified into the two inventions below.

(Invention 1) Claims 1-4 and 8-13
Claim 1 lacks novelty in light of documents 1-3, and thus does not have a special technical feature.
In addition, claims 2-4, 8-10, and 13 are not dependent on claim 1, and are thus classified as invention 1.
Also, claims 11 and 12 are inventively associated with claim 1.
Therefore, claims 1-4 and 8-13 are classified as invention 1.

(Invention 2) Claims 5-10 and 13
Claim 5 shares, with claim 1 classified as invention 1, the common technical feature of a “polymer containing a lithiated phenolic hydroxyl group.”
However, said technical feature does not make a contribution over the prior art in light of the disclosures of documents 1-3, and thus cannot be said to be a special technical feature. Furthermore, there are no other same or corresponding special technical features between these inventions.
In addition, claim 5 is not dependent on claim 1.
Therefore, claim 5 and claims 6-10 and 13 dependent on claim 5 are classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-4, 8-13**

**Remark on Protest**

☐ The additional search fees were accompanied by the applicant’s protest and, where applicable, the payment of a protest fee.

☐ The additional search fees were accompanied by the applicant’s protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2022/043421**

| Patent document cited in search report | Publication date (day/month/year) | Patent family member(s) | Publication date (day/month/year) |
|---|---|---|---|
| JP 2004-119318 A | 15 April 2004 | (Family: none) | |
| JP 2-212559 A | 23 August 1990 | US 4882243 A<br>claims, examples 2-3<br>EP 376466 A2 | |
| WO 2016/035555 A1 | 10 March 2016 | US 2017/0174801 A1<br>paragraph [0428]<br>KR 10-2017-0039224 A<br>TW 201612629 A | |
| JP 2015-53244 A | 19 March 2015 | US 2015/0280230 A1<br>claims, paragraphs [0076]-[0080]<br>EP 2911230 A1<br>CN 104737352 A<br>KR 10-2015-0074021 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H11502819 A
- US 5705689 A
- US 6120941 A
- US 6022643 A
- US 6352798 B

### Non-patent literature cited in the description

- *RSC Advances,* 2016, vol. 6 (58), 53140-53147